# EUROPEAN PATENT SPECIFICATION

(11) **EP 1 754 657 B1**
(45) Date of publication and mention of the grant of the patent: **15.06.2011**
(21) Application number: 06017287.1
(22) Date of filing: 18.08.2006
(51) Int. Cl.: B62J 1/12

(54) **Motorcycle with a seat height adjusting device**
Motorrad mit einer Sitzhöhe-Verstellungsvorrichtung
Motocyclette comportant un dispositif de réglage de la hauteur d'un siège

(30) Priority: 19.08.2005 JP 2005238428
(43) Date of publication of application: 21.02.2007
(73) Proprietor: Yamaha Hatsudoki Kabushiki Kaisha, Shizuoka-ken Shizuoka 438-8501 (JP)
(72) Inventor: Yoshida, Takayuki, Iwata-shi Shizuoka-ken 438-8501 (JP); Hayashi, Michiya, Iwata-shi Shizuoka-ken 438-8501 (JP)
(74) Representative: Grünecker, Kinkeldey, Stockmair & Schwanhäusser Anwaltssozietät

(56) References cited:
- EP-A- 0 751 062
- EP-A- 1 437 293
- DE-A1- 4 330 120
- JP-A- 4 085 185

## Description

The present invention relates to a motorcycle with a seat height changing device according to the preamble of independent claim 1.

A seat height changing device for changing seat height of a motorcycle has been disclosed in JP 3,040,714 and JP-A-2003-81152, for example.

According to the structures of the seat height changing devices shown in said prior art, an engaging member which engages with the front end of a rider's main seat is shifted upward and downward.

The seat height changing device according to JP 3,040,714 includes a supporting rod extending in the vehicle width direction and engaging with the front end of the main seat, and an engaging member for detachably engaging with both ends of the supporting rod. The engaging member has a plurality of engaging grooves open to above. These engaging grooves are formed at the relatively low position in the front part of the vehicle body and at the relatively high position in the rear part of the vehicle body. Thus, the height of the main seat is lowered when the supporting rod engages with the engaging groove in the front part, and is raised when the supporting rod engages with the engaging groove in the rear part.

The seat height changing device according to JP-A-2003-81152 includes a supporting rod extending in the vehicle width direction and engaging with the front end of the main seat, and a pair of left and right link mechanisms for supporting the supporting rod such that the supporting rod can shift upward and downward.

Each of the link mechanisms has a link connected with the supporting rod, a pin provided on the link to extend in the vehicle width direction, and a guide hole which is E-shaped as viewed from the sides and engages with the pin such that the pin can freely shift.

The seat height changing device shown in JP-A-2003-81152 changes the height of the pin by engagement between the pin and any one of three horizontally extending members formed on the guide hole to change the height of the link, I.e., the height of the main seat.

The rear ends of the main seats in both the afore-indicated prior art documents are supported by a tandem seat for co-rider such that the rear ends are not separated therefrom.

According to the conventional seat height changing device shown in JP 3,040,714 the engaging grooves for engaging with both ends of the supporting rod are provided in the front and rear parts such that the heights of the respective engaging grooves are different from each other. According to the conventional seat height changing device shown in JP-A-2003-81152, the pair of the left and right link mechanisms are used to change the height of the main seat. As obvious, the structures for changing the height of the main seat in the seat height changing devices disclosed in both documents are complicated, which increases the number of components and the number of assembly processes. Moreover, the weights of the seat height changing devices increase as these structures become complicated.

Furthermore, according to the conventional afore-indicated seat height changing devices, the clearance between the fuel tank and the main seat is widened when the main seat is raised and shifted toward the rear region of the vehicle body.

In addition, DE 43 30 120 A1 discloses a divided seat bench for a motorcycle wherein each seat bench part is individually removable and securable. Moreover, JP 04 085185 A discloses a seat height changing device for a scooter type vehicle wherein the height of the seat is changed by sliding it back and forth along an inclined seat receiver in the longitudinal direction of the scooter type vehicle. Also, the seat height changing device according to EP 1 437 293 A adjusts the height of a seat for a scooter type vehicle through a supporting member comprising two sets of columns which pivot in a longitudinal direction about a set of seat rails, wherein the columns on the left rail are connected to the corresponding column on the right rail by supporting rods, which in turn are rotably supported by pivotal arms that both pivot around and slide along each seat rail.

The invention has been developed to solve the above problem. It is an object of the invention to provide a motorcycle with a seat height changing device capable of securely changing seat height by a simple structure.

In order to achieve this inventive object, a motorcycle comprises the features of independent claim 1. The motorcycle comprises a seat; a supporting member interposed between the seat and a vehicle body frame to receive the load of the seat; and engaging means for detachably attaching the seat to the vehicle body frame. The supporting member is supported by the vehicle body frame such that the supporting member can be shifted in the horizontal direction. The supporting member has a supporting seat arrangement on which the seat is mounted. The supporting seat arrangement includes a low-position supporting seat means and a high-position supporting seat means whose surface level is higher than that of the low-position supporting seat means. The low-position supporting seat means and the high-positlon supporting seat means are both disposed In the movement direction of the supporting member.

Preferred embodiments of said motorcycle with A seat height changing deice are subject of the subclaims as follows:

In the motorcycle according to claim 9, the engaging means in the motorcycle according to claim 1 includes an engaging member for preventing upward and downward movement of the seat when the seat is supported by the low-position supporting seat means or the high-position supporting seat means.

In the motorcycle according to claim 10, the engaging means in the motorcycle according to claim 1 includes an engaging member for preventing horizontal movement of the seat when the seat is supported by a low-position supporting seat and when the seat is supported by a high-position supporting seat.

In the motorcycle according to claim 11, the movement direction of the supporting member in the motorcycle according to claim 1 is the front-and-rear direction. A first seat supporting position at which the seat is supported by the low-position supporting seat means is provided. A second seat supporting position at which the high-position supporting seat means is located closer to the front of the vehicle body than the low-position supporting seat means located at the first seat supporting position Is provided. Positioning means for positioning the supporting member at either the first seat supporting position or the second seat supporting position is provided.

In the motorcycle according to claim 12, the positioning means in the motorcycle according to claim 11 includes a plurality of positioning members. The plural positioning members are disposed on the vehicle body frame away from one another in the front-and-rear direction for a distance equal to the distance between the first seat supporting position and the second seat supporting position.

In the motorcycle according to claim 13, the vehicle body frame in the motorcycle according to claim 1 includes a seat rail positioned in the rear part. The supporting member is supported on the seat rail such that the supporting member can freely slide thereon.

In the motorcycle according to claim 14, the engaging means in the motorcycle according to claim 1 includes: a front engaging member containing a front engaging piece which projects frontward from the front end of the seat, and a first front engaging opening for engaging with the front engaging piece when the seat is located at the high-position supporting seat means, and a second front engaging opening for engaging with the front engaging piece when the seat is located at the low-position supporting seat means, which are formed on the vehicle body frame and have side walls for contacting the front engaging piece from both lateral sides and an upper wall for contacting the front engaging piece from above, a rear engaging member containing a rear engaging piece which projects downward from the rear end of the seat and has a first engaging hole for engaging with a lock device, which is formed on the vehicle body frame, when the seat is located at the high-position supporting seat means, and a second engaging hole for engaging with the lock device when the seat is located at the low-position supporting seat means, and a rear positioning member containing front and rear positioning projections which project downward from the rear end of the seat, and a first positioning hole, which is formed on the vehicle body frame and engages with the front positioning projection, for positioning the front positioning projection when the seat is located at the high-position supporting seat means, and a second positioning hole, which is also formed on the vehicle body frame and engages with the rear positioning projection for positioning the rear positioning projection when the seat is located at the low-position supporting seat means.

In the motorcycle according to claim 15, the vehicle body frame in the motorcycle according to claim 14 contains a pair of left and right seat rails positioned In the rear part. A bracket disposed between the seat rails and attached thereto Is provided to support a fuel tank. The front engaging member is provided on the bracket.

In the motorcycle according to claim 16, the motorcycle according to any one of claims 1 through 15 includes a main seat for a rider and a tandem seat for a co-rider. The front end of the tandem seat at its both lateral sides is so shaped as to hold the rear end of the main seat from both lateral sides.

In the motorcycle according to claim 4, the supporting member in the motorcycle according to claim 1 has a substantially rectangular shape in a plan view. Further, according to claim 5, the supporting seats are formed at the respective corners of the supporting member to support the seat.

In the motorcycle according to claim 1 of the invention when considering same jointly with its preferred embodiments of claims 2 and 3, the position of the seat is lowered by shifting the supporting member in the horizontal direction and placing the seat on the low-position supporting seat means, and the position of the seat is raised by placing the seat on the high-position supporting seat means. Thus, the height of the seat can be changed only by shifting the supporting member in the horizontal direction to change the selected position of the supporting seat.

Accordingly, the seat height changing device can securely change the seat height by a simple structure.

In the preferred embodiments of the motorcycle according to claims 11 and 12 of the invention, the seat is located on the front side when the seat is located at the high position, and the seat is located on the rear side when the seat Is located, at the low position.

Accordingly, the seat can be shifted along the rear surface of the fuel tank which is inclined downward to the rear of the vehicle.

In the preferred embodiment of the motorcycle according to claim 13 of the invention, the supporting member can be shifted along the seat rails in the front-and-rear direction. Thus, the number of components required for the seat height changing device according to the invention is smaller than that in the case where a dedicated guide member is used.

In the preferred embodiments of the motorcycle according to claim 14 of the invention, a movable component which moves in accordance with the change of the seat height is not needed. According to the invention, therefore, the condition where the seat is fixed at the low position and the condition where the seat is fixed at the high position can be produced by a simple structure.

In the preferred embodiment of the motorcycle according to claim 15 of the invention, the fuel tank supporting bracket can be used as the front engaging member. Thus, the number of components required for the seat height changing device is smaller than that In the case where a component functioning only as the front engaging member is provided.

In the preferred embodiment of the motorcycle according to claim 16 of the invention, the rear end of the main seat is covered by the front end of the tandem seat from the sides. Thus, the rear end of the main seat is not exposed to the sides of the vehicle body.

In the preferred embodiment of the motorcycle according to claim 4 of the invention, the seat can be supported by the single support member. Thus, the operation for shifting the support member for the change of the seat height can be easily carried out.

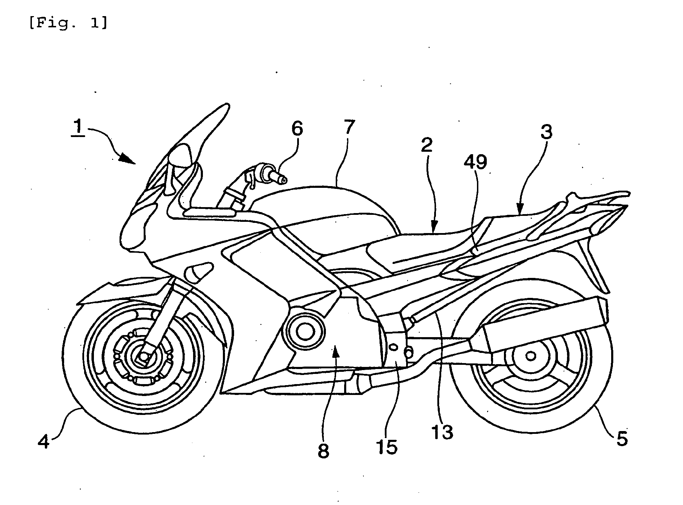

A motorcycle with A seat height changing device in an embodiment according to the invention is hereinafter described in detail with reference to Figs. 1 through 18.

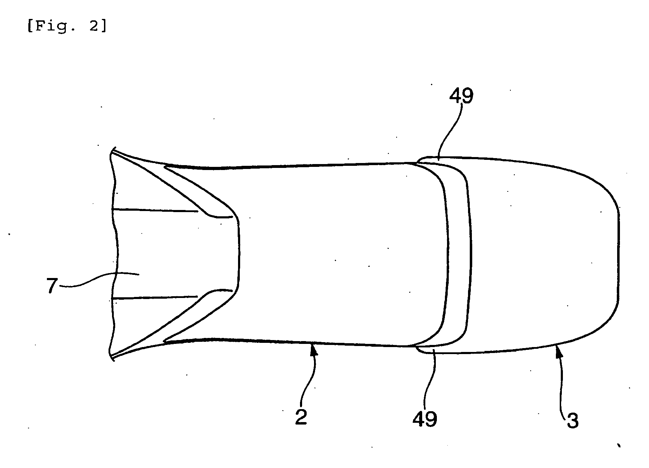

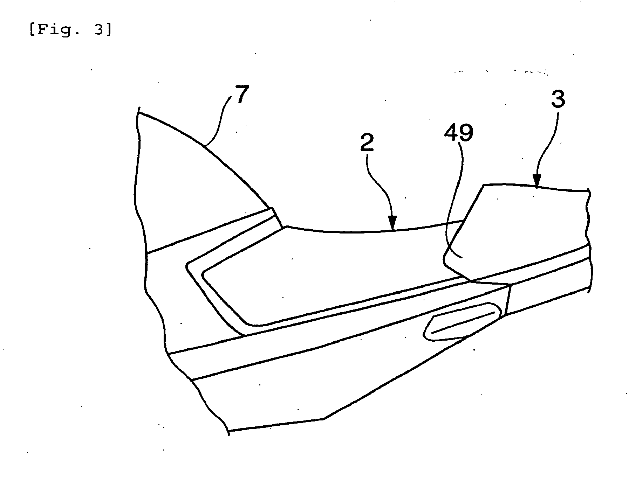

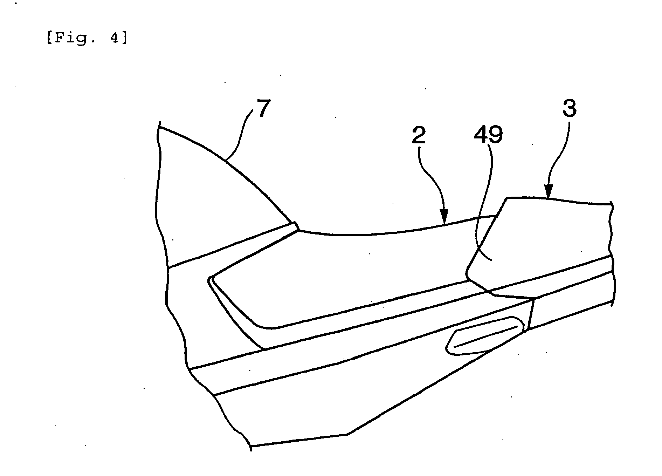

Fig. 1 is a side view of a motorcycle including a seat height changing device according to the invention. Fig. 2 is a plan view of a main seat and a tandem seat. Figs. 3 and 4 are side views illustrating the attachment condition of the main seat, where Fig. 3 shows the condition of the main seat at a low position, and Fig. 4 shows the condition of the main seat at a high position.

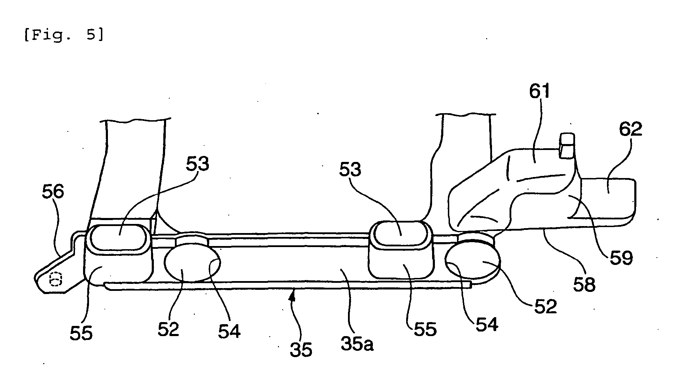

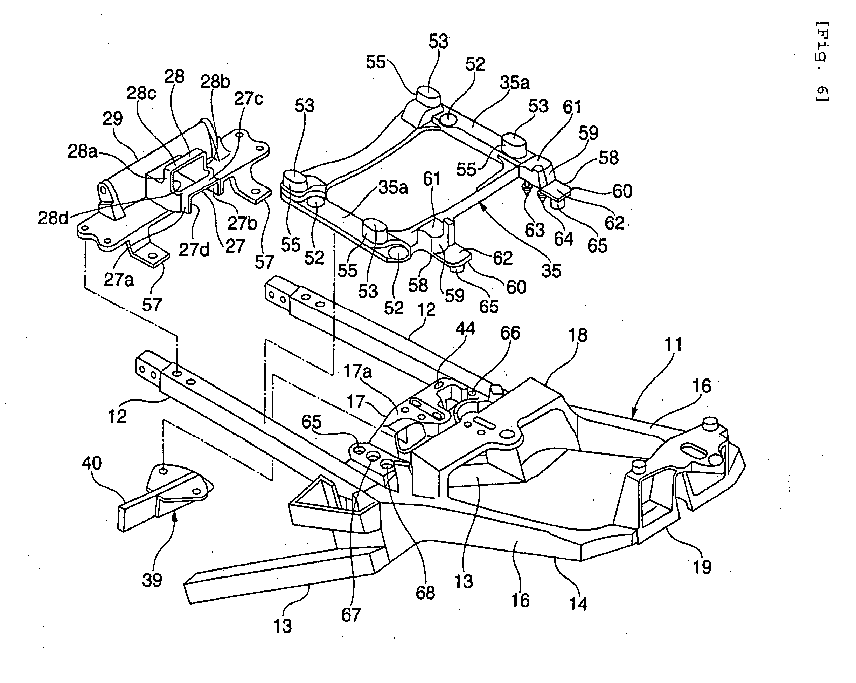

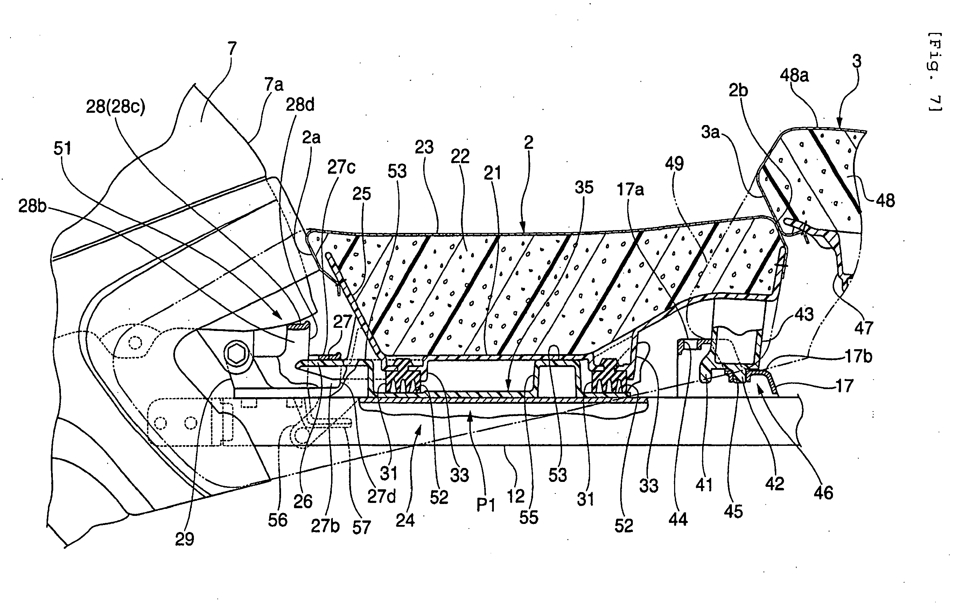

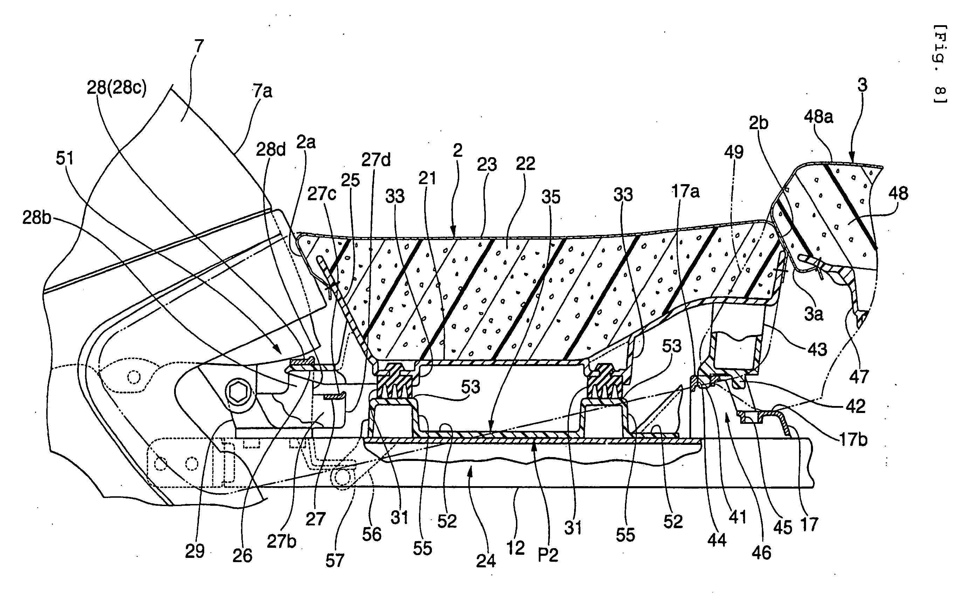

Fig. 5 is a perspective view showing a part of a supporting member. Fig. 6 is a perspective view of a rear frame and the supporting member. Figs. 7 and 8 are vertical cross-sectional view of a main part, where Fig. 7 shows the condition of the main seat at the low position, and Fig. 8 shows the condition of the main seat at the high position.

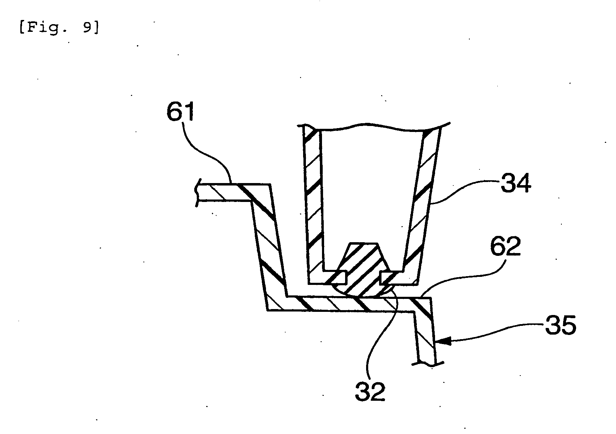

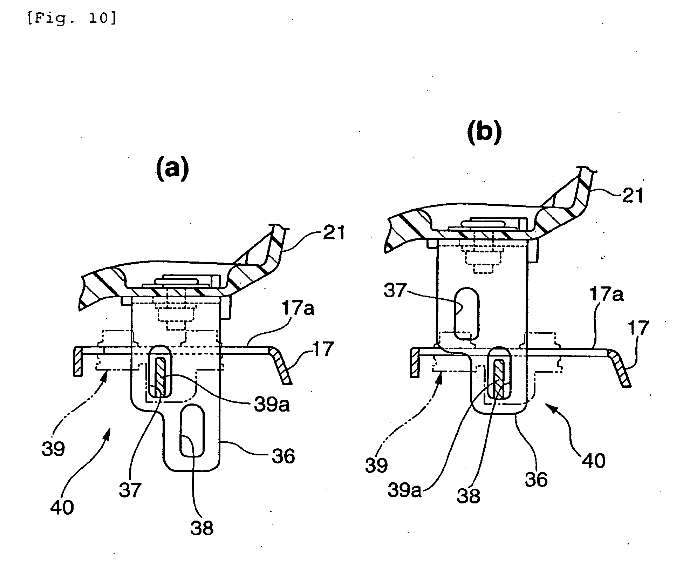

Fig. 9 is a cross-sectional view illustrating a leg for supporting the rear end of the main seat and a part of the supporting member. Figs. 10(a) and 10(b) are cross-sectional views showing the engagement condition between a rear engaging piece and a lock device, wherein Fig. 10(a) shows the condition of the main seat at the low position, and Fig. 10(b) shows the condition of the main seat at the high position.

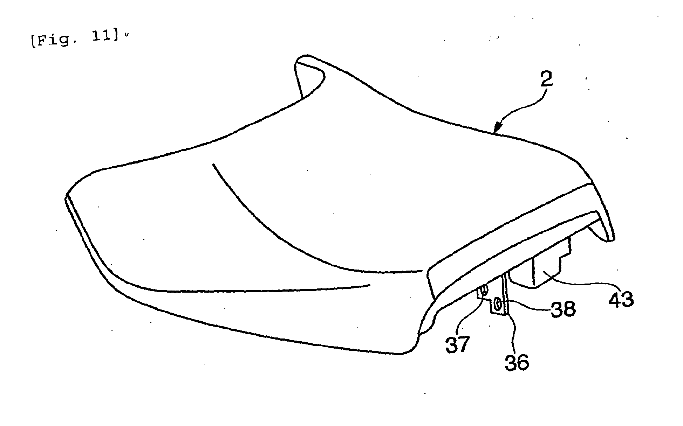

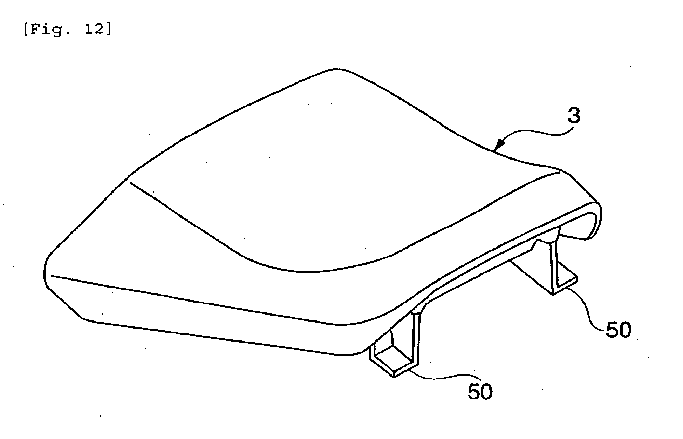

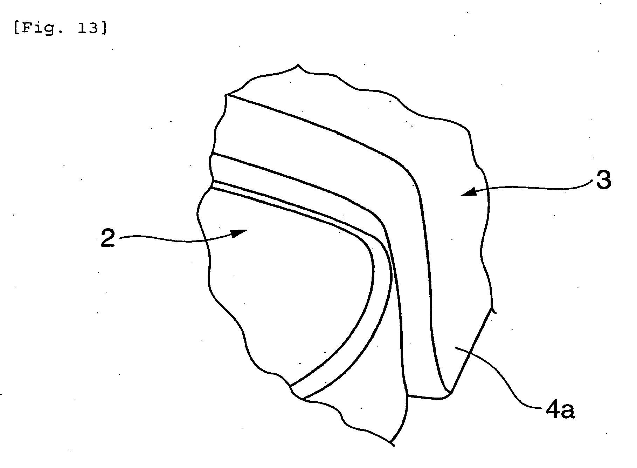

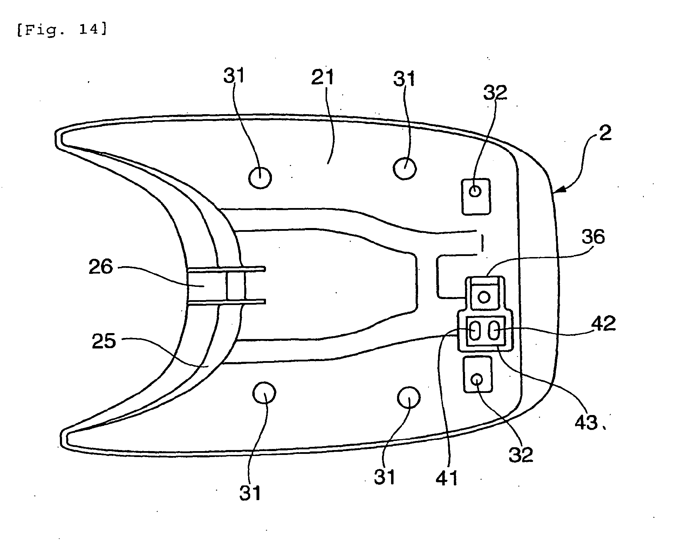

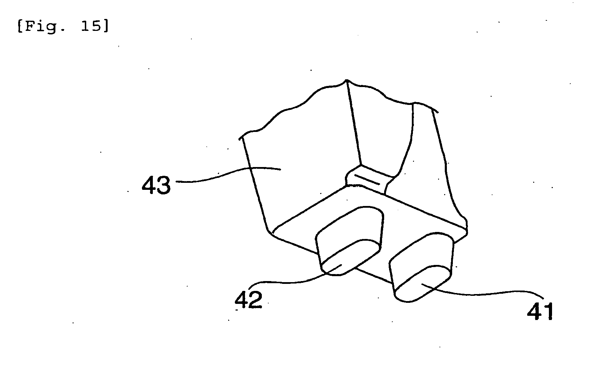

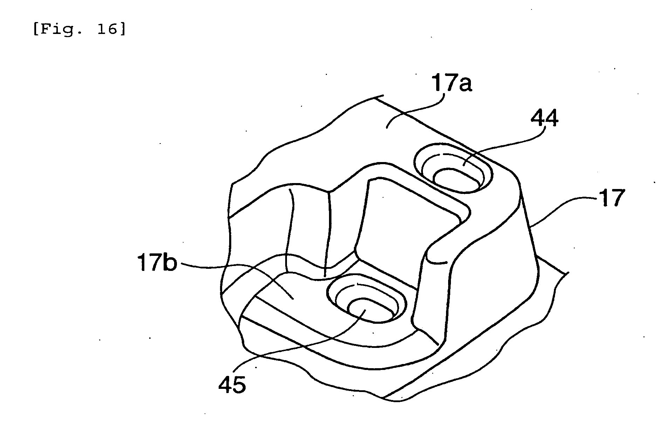

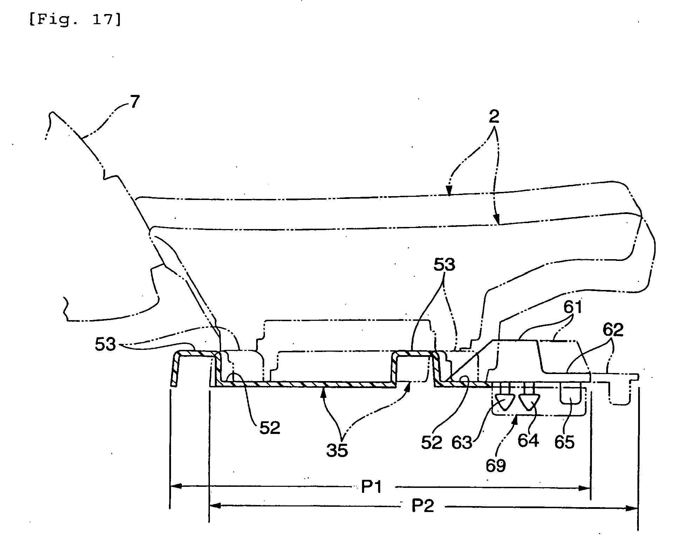

Fig. 11 is a perspective view of the main seat. Fig. 12 is a perspective view of the tandem seat. Fig. 13 is a perspective view showing the connection between the main seat and the tandem seat. Fig. 14 is a bottom view of the main seat. Fig. 15 is a perspective view showing a positioning projection of the main seat. Fig. 16 is a perspective view showing a positioning hole engaging with the positioning projection. Fig. 17 is a cross-sectional view showing the positions of the supporting member in the front-and-rear direction.

In these figures, a motorcycle 1 in this embodiment is shown. The motorcycle 1 includes a main seat 2 on which a not-shown rider sits, and a tandem seat 3 on which a co-rider sits. A seat according to the invention is constituted by the main seat 2. In Fig. 1, a front wheel 4, a rear wheel 5, steering handlebars 6, a fuel tank 7, and an engine 8 are shown.

The components positioned in the rear region of the vehicle body of the motorcycle 1 such as the main seat 2 and the tandem seat 3 are supported by a rear frame 11 shown in Fig. 6. The rear frame 11 is constituted by a pair of left and right seat rails 12, 12, back stays 13, 13, and a die-cast rear frame main body 14 welded to the rear ends of both the frame members 12 and 13.

The seat rails 12 are constituted by rectangular pipes, and the front ends of the seat rails 12 are connected with the rear end of a main frame (not shown). The back stays 13 are constituted by rectangular pipes, and the front ends of the back stays 13 are connected with the rear end of a rear arm bracket 15 at its intermediate position in the up-and-down direction as illustrated in Fig. 1.

The rear frame main body 14 is constituted by a pair of left and right extending members 16, 16 extending in the front-and-rear direction, and first through third cross members 17 through 19 for connecting these extending members 16, 16 extending in the left-and-right direction.

As illustrated in Figs. 7 and 8, the main seat 2 is constituted by a bottom plate 21, a cushion member 22, and a covering 23. The front end of the main seat 2 in this embodiment is so shaped as to hold the rear end of the fuel tank 7 from both sides as illustrated in Figs. 2 and 11. A front surface 2a and a rear surface 2b of the main seat 2 in this embodiment are inclined downward to the rear such that the front and rear surfaces 2a and 2b are substantially parallel to a rear surface 7a of the fuel tank 7 as viewed from the sides as illustrated in Figs. 7 and 8.

The main seat 2 is detachably attached to the rear frame 11 such that the height of the main seat 2 can be changed by a seat height changing device 24 which will be described later.

As illustrated in Fig. 14, a fuel tank insertion member 25 which is open to the front of the vehicle body (to the left in the figure) as viewed from below is formed integrally with the bottom plate 21. As illustrated in Figs. 7 and 8, the fuel tank insertion member 25 is inclined upward to the front. A front engaging piece 26 for fixing the front end of the main seat 2 to the vehicle body is formed integrally with the fuel tank insertion member 25 at its central portion in the vehicle width direction (rear end).

The front engaging piece 26 has a plate shape extending in the horizontal direction, and projects toward the front from the central portion of the fuel tank insertion member 25 so as to engage with front engaging members 27 and 28 provided on the vehicle body as illustrated in Figs. 7 and 8. As illustrated in Fig. 6, the front engaging members 27 and 28 are equipped on a fuel tank supporting bracket 29 attached to the front ends of the seat rails 12 such that the front engaging members 27 and 28 are disposed side by side in the up-and-down direction. The front engaging members 27 and 28 are constituted by side walls 27a, 27b, 28a, and 28b contacting the front engaging piece 26 from both sides and upper walls 27c and 28c contacting the front engaging piece 26 from above, and front engaging openings 27d and 28d formed by these walls.

As illustrated in Figs. 7 and 8, the front engaging member 28 of the two front engaging members 27 and 28, which is disposed at the upper position, is located in a relatively front part of the vehicle body and engages with the front engaging piece 26 of the main seat 2 supported at the higher position by the seat height changing device 24 which will be described later. Thus, a first front engaging opening according to the invention is formed by the front engaging opening 28d of the front engaging member 28. On the other hand, the front engaging member 27 disposed at the lower position engages with the front engaging piece 26 of the main seat 2 supported at the lower position by the seat height changing device 24 which will be described later. Thus, a second front engaging opening according to the invention is formed by the front engaging opening 27d of the front engaging member 27.

Main legs 31 and sub legs 32 which are made of rubber project downward from both sides of the bottom plate 21. As illustrated in Figs. 7 and 8, the main legs 31 are cylindrical and engage with the lower ends of convexes 33 formed on the bottom plate 21. As illustrated in Fig. 9, the sub legs 32 are semi-spherical and engage with the lower ends of convexes 34 formed on the bottom plate 21. The main legs 31 and sub legs 32 are supported by a supporting member 35 which will be described later.

As illustrated in Figs. 10(a) and 10(b), a rear engaging piece 36 extending downward is attached to the rear end of the bottom plate 21 at its central portion in the vehicle width direction. The rear engaging piece 36 has a plate shape extending in the front-and-rear direction and up-and-down direction, and two engaging holes 37 and 38 are formed on the rear engaging piece 36. The engaging hole 37 is provided in the upper and front region of the rear engaging piece 36 with respect to the vehicle body, while the engaging hole 38 is provided in the lower and rear region of the rear engaging piece 36 with respect to the vehicle body.

The sizes of the engaging holes 37 and 38 are determined such that an engaging bar 39a of a lock device 39 shown in Fig. 10 can be inserted through the engaging holes 37 and 38. The lock device 39 is so designed as to be changeable between the locking condition (condition where the engaging bar 39a is inserted through the engaging hole 37 or 38) and the releasing condition by a not-shown key. The lock device 39 is attached to an extending member 17a extending in the vehicle width direction (see Fig. 6) which is formed on the first cross member 17 of the rear frame 11 such that the extending member 17a is positioned higher than the cross member 17. A rear engaging member 40 according to the invention is constituted by the lock device 39 and the rear engaging piece 36 having the engaging holes 37 and 38.

The engaging hole 38 of the engaging holes 37 and 38, which is located at the lower position, engages with the lock device 39 when the main seat 2 is supported at the higher position by the seat height changing device 24 which will be described later. On the other hand, the engaging hole 37 located at the higher position engages with the lock device 39 when the main seat 2 is supported at the lower position by the seat height changing device 24. Thus, in this embodiment, a first engaging hole according to the invention is constituted by the upper engaging hole 38, and a second engaging hole according to the invention is constituted by the lower engaging hole 37.

Positioning projections 41 and 42 for determining the position of the main seat 2 in the front-and-rear direction are provided at the rear end of the bottom plate 21 in the right part of the rear engaging piece 36 with respect to the vehicle body (lower part in Fig. 14). As illustrated in Fig. 15, these projections 41 and 42 project from the lower end of a convex 43 formed on the bottom plate 21 such that the projections 41 and 42 are disposed side by side apart from each other in the front-and-rear direction with respect to the vehicle body. The projections 41 and 42 engage with first and second positioning holes 44 and 45 (see Fig. 16) formed on the extending member 17a extending from the first cross member 17 in the vehicle width direction. The first and second positioning holes 44 and 45 are provided side by side apart from each other in the front-and-rear direction with respect to the vehicle body.

As illustrated in Fig. 16, the first positioning hole 44 of the first and second positioning holes 44 and 45, which is disposed on the front side with respect to the vehicle body, is provided at the uppermost position of the extending member 17a extending in the vehicle width direction. On the other hand, as illustrated in Fig. 16, the second positioning hole 45 disposed on the rear side with respect to the vehicle body is provided on a partially lowered portion as a stepped portion 17b of the extending member 17a extending in the vehicle width direction. As illustrated in Fig. 8, in the first and second positioning holes 44 and 45,the first positioning hole 44 formed at a relatively higher position on the front side with respect to the vehicle body engages with the front projection 41 when the main seat 2 is supported at the higher position by seat height changing device 24 which will be described later. As illustrated in Fig. 7, the other second positioning hole 45 engage with the rear projection 42 when the main seat 2 is supported at the lower position by the seat height changing device 24.

A rear positioning member 46 according to the invention (see Figs. 7 and 8) is constituted by the first and second positioning projections 41 and 42 and the first and second positioning holes 44 and 45.

As illustrated in Figs. 7 and 8, the tandem seat 3 is constituted by a bottom plate 47, a cushion member 48, and a covering 48a, and is detachably attached to the rear frame 11. As illustrated in Figs. 7 and 8, a front surface 3a at the front end of the tandem seat 3 and at its central portion in the vehicle width direction is inclined upward to the front in a direction parallel to the rear surface 2b of the main seat 2.

At the both sides of the front end of the tandem seat 3, as illustrated in Figs. 2, 12 and 13, a holding member 49 has front lower ends extending to the front to hold the rear end of the main seat 2 from both sides. That is, the holding member 49 shown by an alternate long and two short dashes line in Figs. 7 and 8 overlaps with the rear end of the main seat 2 as viewed from the sides. As illustrated in Fig. 1, the front surface of the holding member 49 is so shaped as to extend along the rear end of the main seat 2 inclined upward to the rear as viewed from the sides.

For attaching the tandem seat 3 to the rear frame 11, an engaging piece (not shown) provided at the front end of the tandem seat 3 engages with a not-shown lock device of the rear frame 11 under the condition where legs provided on the rear end of the bottom plate 47 (see Fig. 12) and legs (not shown) provided on the front end and both sides of the bottom plate 47 of the tandem seat 3 are supported by the rear frame 11. This lock device is similar to that of the main seat 2, and attached to the center of the second cross member 18 in the vehicle width direction.

As illustrated in Figs. 7 and 8, the height changing apparatus 24 is constituted by a supporting member 35 interposed between the main seat 2 and the seat rails 12, and engaging means 51 having components such as the front engaging piece 26 and the rear engaging piece 36. The engaging means 51 prevents vertical and horizontal movements of the main seat 2, and is constituted by the engaging piece 26, the front engaging members 27 and 28, the engaging holes 37 and 38 of the rear engaging piece 36, the lock device 39, the first and second positioning holes 44 and 45, and other components.

As illustrated in Fig. 6, the supporting member 35 is made of plastic material and has a frame shape in the plan view. Both sides 35a of the supporting member 35 are so formed as to be carried on the seat rails 12 when attached to the vehicle body as shown in Figs. 7 and 8. The lower surfaces of the both sides are flat so that the support member 35 can slide on the seat rails 12 in the front-and-rear direction.

As illustrated in Fig. 5, each of both ends of the both sides 35a in the front-and-rear direction, i.e., the four corners of the supporting member 35 which is frame-shaped in the plan view, has a low-position supporting seat means 52 and a high-position supporting seat means 53 disposed side by side in the front-and-rear direction for supporting the main leg 31 of the main seat 2. Thus, the low-position supporting seat means 52 and the high-position supporting seat means 53 are provided in such positions that they can support the corresponding one of the four corners of the main seat 2 in the front-and-rear and left-and-right directions.

The low-position supporting seat means 52 is constituted by the bottom surface of a round concave 54 formed on the both sides 35a. The high-position supporting seat means 53 is constituted by the upper surface of a convex 55 projecting upward from the both sides 35a. The difference in height between the seat levels of the low-position supporting seat means 52 and of the high-position supporting seat means 53 is the same for all of the low-position supporting seats 52 and the high-position supporting seats 53 provided at the four corners of the supporting member 35. The height differences between the two front engaging members 27 and 28, between the two engaging holes 37 and 38, and between the first and second positioning holes 44 and 45 are set at the same height difference between the seat levels of the low-position supporting seat 52 means and the high-position supporting seat means 53.

As illustrated in Fig. 5, a guide member 56 projecting toward the front is provided on the front end of the both sides 35a. The guide member 56 is plate-shaped, and engages with a projecting piece 57 (see Figs. 6, 7 and 8) of the fuel tank supporting bracket 29, which is attached to the seat rails 12, from outside in the vehicle width direction to control movement of the supporting member 35 in the vehicle width direction.

As illustrated in Figs. 5 and 6, rear extending members 58 extending to the rear of the vehicle body are provided at both ends of the supporting member 35 in the vehicle width direction located at its rear end. The rear extending members 58 support the sub legs 32 of the main seat 2, and each of the rear extending members 58 is constituted by a convex member 59 located on the front side with respect to the vehicle body and a plate-shaped member 60 formed at the back of the convex member 59 and at a low position. A high-position supporting seat 61 is provided on the upper surface of the convex member 59, and a low-position supporting seat 62 is provided on the upper surface of the plate-shaped member 60. The height difference between the supporting seats 61 and 62 is also set at the same height difference between the supporting seats 52 and 53 located at the four corners of the supporting member 35.

As illustrated in Fig. 6, each of the lower parts of the convex members 59 has two engaging members 63 and 64 and a positioning pin 65 for retaining the supporting member 35 at a first supporting position and a second supporting position which will be described later, all of which members and pin project downward. The lower ends of the engaging members 63 and 64 have a shape of circular cone extending downward, and engage with an engaging member (not shown) of the vehicle body. The engaging member is made of rubber and has a cylindrical shape with which the engaging members 63 and 64 can engage. The engaging member is attached to a through hole 66 (see Fig. 6) formed on both ends of the first cross member 17. Positioning holes 67 and 68 engaging with the positioning pin 65 are provided on the first cross member 17 behind the through hole 66. These positioning holes 67 and 68 are located side by side in the front-and-rear direction with a predetermined distance therebetween. Positioning means 69 according to the invention (see Fig. 17) is constituted by the positioning pin 65 and the positioning holes 67 and 68. The positioning means 69 in this embodiment has two positioning points defined by the positioning hole 67 and the positioning hole 68.

When the positioning pin 65 engages with the positioning hole 67 of the positioning holes 67 and 68, which is located on the front side with respect to the vehicle body, the engaging member 64 located on the rear side with respect to the vehicle body engages with the engaging member of the through hole 66 such that the supporting member 35 can be retained on the relatively front side. In this embodiment, the position of the seat supporting member 35 when the supporting member 35 is held by the components such as the engaging members 63 and 64 and the positioning pin 65 on the front side with respect to the vehicle body is referred to as a first seat supporting position P1 (see Fig. 17). On the other hand, when the positioning pin 65 engages with the positioning hole 68 located on the rear side with respect to the vehicle body, the engaging member 63 located on the front side with respect to the vehicle body engages with the engaging member of the through hole 66 such that the supporting member 35 can be retained on the relatively rear side. In this embodiment, the position of the seat supporting member 35 when the supporting member 35 is held by the components such as the engaging members 63 and 64 and the positioning pin 65 on the rear side with respect to the vehicle body is referred to as a second seat supporting position P2 (see Fig. 17).

As illustrated in Figs. 3 and 7, the seat height changing device 24 in this embodiment is so designed as to position the main seat 2 at a relatively low position where the front end of the main seat 2 comes to be opposed to the rear surface of the fuel tank 7 with a predetermined clearance therebetween by placing the main legs 31 and the sub legs 32 of the main seat 2 on the low-position supporting seats 52 and 62 of the supporting member 35 positioned at the first seat supporting position P1. On the other hand, as illustrated in Fig. 4 and 8, the seat height changing device 24 in this embodiment is so designed as to position the main seat 2 at a relatively high position where the front end of the main seat 2 comes to be opposed to the rear surface of the fuel tank 7 with a predetermined clearance therebetween by placing the main legs 31 and the sub legs 32 of the main seat 2 on the high-position supporting seats 53 and 61 of the supporting member 35 positioned at the second seat supporting position P2.

For changing the height of the main seat 2 using the seat height changing device 24 having the above structure, the main seat 2 and the tandem seat 3 are initially separated from the vehicle body. The tandem seat 3 can be detached from the vehicle body by releasing the locking condition of the link device and lifting the tandem seat 3 from the rear frame 11. The main seat 2 can be detached from the vehicle body by releasing the locking condition of the link device 39 and lifting the rear end of the main seat 2 diagonally upward to the rear of the vehicle.

Then, the position of the supporting member 35 in the front-and-rear direction is changed, and the main seat 2 is placed on the supporting member 35. For positioning the main seat at the lower position, the position of the supporting member 35 is determined at the first seat supporting position P1 where the supporting member 35 is located on the relatively front side with respect to the seat rails 12 as illustrated in Figs. 7 and 17. For positioning the main seat 2 at the higher position, the position of the supporting member 35 is determined at the second seat supporting position P2 where the supporting member 35 is located on the relatively rear side with respect to the seat rails 12 as illustrated in Figs. 8 and 17.

As illustrated in Fig. 7, for lowering the position of the main seat 2, the front engaging piece 26 of the main eat 2 engages with the front engaging member 27 at the lower position, and the main legs 31 and the sub legs 32 of the main seat 2 are placed on the low-position supporting seats 52 and 62 of the supporting member 35 located at the first seat supporting position P1.

Then, the positioning projection 42 of the two positioning projections 41 and 42 formed at the rear end of the main seat 2, which is closer to the rear of the vehicle, engages with the second positioning hole 45 and simultaneously the rear engaging piece 36 engages with the lock device 39. Thus, as illustrated in Fig. 3, the main seat 2 is fixed at the lower position by the engagements between the front engaging piece 26 and the front engaging member 27 and between the rear engaging piece 36 and the lock device 39.

For placing the main seat 2 on the supporting member 35 located at the second seat supporting position P2, as shown in Fig. 8, the front engaging piece 26 of the main seat 2 engages with the front engaging member 28 at the upper position, and the main legs 31 and the sub legs 32 of the main seat 2 are placed on the high-position supporting seats 53 and 61 of the supporting member 35 located at the second seat supporting position P2. Then, the positioning projection 41 of the two positioning projections 41 and 42 formed at the rear end of the main seat 2, which is closer to the front of the vehicle, engages with the first positioning hole 44, and simultaneously the rear engaging piece 36 engages with the lock device 39. Thus, as illustrated in Fig. 4, the main seat 2 is fixed at the higher position by the engagements between the front engaging piece 26 and the front engaging member 28 and between the rear engaging piece 36 and the lock device 39.

After the main seat 2 is fixed in this way, the tandem seat 3 is attached to the rear frame 11 and fixed thereto to complete the height changing process for the main seat 2.

Thus, in the seat height changing device 24 of the motorcycle 1 described above, the main seat 2 is at the lower position when the main seat 2 is supported by the low-position supporting seats 52 and 62 of the supporting member 35 located at the first seat supporting position P1, and is at the higher position when the main seat 2 is supported by the high-position supporting seats 53 and 61 of the supporting member 35 located at the second seat supporting position P2. Accordingly, the seat height changing device 24 can securely change the height of the main seat 2 in accordance with the position of the supporting member 35 in the front-and-rear direction by a simple structure.

According to the seat height changing device 24 in this embodiment, the main seat 2 is located on the relatively front side when the main seat 2 is at the relatively high position, and the main seat 2 is located on the relatively rear side when the main seat 2 is at the relatively low position. In changing the height of the main seat 2, therefore, the main seat 2 shifts along the rear surface 7a of the fuel tank 7 which is inclined downward to the rear of the vehicle. As a result, the clearance between the main seat 2 and the fuel tank 7 can be kept substantially at the same length even when the height of the main seat 2 is changed.

Since the supporting member 35 is supported by the seat rails 12 in the seat height changing device 24 according to this embodiment, the supporting member 35 can be shifted along the seat rails 12 in the front-and-rear direction. In this embodiment, therefore, a dedicated guide member for holding the supporting member 35 such that the supporting member 35 can move in the front-and-rear direction is not needed.

In the seat height changing device 24 according to this embodiment, the main seat 2 is fixed by the engagement between the front engaging piece 26 and the rear engaging piece 36 of the main seat 2 and the front engaging members 27 and 28 and the lock device 39 of the vehicle body. Thus, the seat height changing device 24 according to this embodiment can fix the seat after height change to the vehicle body by easier operation than in the case where a movable component shifting in accordance with the height change of the main seat 2. Moreover, since the seat height changing device 24 does not use the tandem seat 3 for fixing the main seat 2 to the vehicle body, the tandem seat 3 can be made compact requiring only the minimum components.

In the seat height changing device 24 according to this embodiment, the front engaging members 27 and 28 are provided on the fuel tank supporting bracket 29. Thus, the number of required components is smaller than in the case where components functioning only as front engaging members are equipped.

In the seat height changing device 24 according to this embodiment, the rear end of the main seat 2 is covered by the holding member 49 of the tandem seat 3 from the sides, and thus is not exposed to the sides of the vehicle body.

Since the supporting member 35 of the seat height changing device 24 according to this embodiment is frame-shaped as viewed in the plan view, the main seat 2 can be supported by the single supporting member 35. Thus, only the single component of the supporting member 35 is required to change the height of the main seat 2 by shifting the main seat 2, which facilitates the procedures for this operation.

Since the motorcycle 1 according to the invention includes the seat height changing device 24 having the above structure, the seat height of the motorcycle 1 can be securely changed by the simple structure.

In this embodiment, the case where the supporting member 35 is shifted in the front-and-rear direction has been described. However, the supporting member 35 may be shifted in the vehicle width direction. According to this structure, the supporting member 35 is divided into the left half and right half in the vehicle body, for example, and both the halves are connected such that one of the halves can be shifted in the vehicle width direction relative to the other half. In this case, both the halves are supported by the cross members or the like on the rear frame.

In this embodiment, the case where the main seat 2 is shifted toward the front of the vehicle body by raising the position of the main seat 2 has been described. However, the seat height changing device according to the invention is not limited to this example. The invention includes a structure where the position of the main seat in the front-and-rear direction does not change even when the height of the main seat changes, a structure where the main seat is shifted toward the rear by raising the position of the main seat, and other structures.

### Brief Description of the Drawings:

- Fig. 1: is a side view showing a motorcycle including a seat height changing device according to the invention,
- Fig. 2: is a plan view showing a main seat and a tandem seat,
- Fig. 3: is a side view showing an attachment condition of the main seat,
- Fig. 4: is a side view showing an attachment condition of the main seat,
- Fig. 5: is a perspective view showing a part of a supporting member,
- Fig. 6: is a perspective view showing a rear frame and the supporting member,
- Fig. 7: is a vertical cross-sectional view showing a main part,
- Fig. 8: is a vertical cross-sectional view showing the main part,
- Fig. 9: is a cross-sectional view showing a leg and a part of the supporting member for supporting the rear end of the main seat,
- Figs. 10(a) and 10(b): are cross-sectional views each showing an engagement condition between a rear engaging piece and a lock device,
- Fig. 11: is a perspective view showing the main seat,
- Fig. 12: is a perspective view showing the tandem seat,
- Fig. 13: is a perspective view showing a connection between the main seat and the tandem seat,
- Fig. 14: is a bottom view of the main seat,
- Fig. 15: is a perspective view showing positioning projections of the main seat,
- Fig. 16: is a perspective view showing positioning holes,
- Fig. 17: is a cross-sectional view illustrating the positions of the supporting member in the front-and-rear direction.

### Description of Reference Numerals and Signs

- 2: main seat
- 3: tandem seat
- 7: fuel tank
- 11: rear frame
- 12: seat rail
- 17: first cross member
- 18: second cross member
- 26: front engaging piece
- 27, 28: front engaging member
- 29: fuel tank supporting bracket
- 35: supporting member
- 36: rear engaging piece
- 37, 38: engaging hole
- 39: lock device
- 41, 42: positioning projection
- 44: first positioning hole
- 45: second positioning hole
- 49: holding member
- 51: engaging means
- 52, 62: low-position supporting seat
- 53, 61: high-position supporting seat
- 65: positioning pin
- 67, 68: positioning hole

## Claims

1. A motorcycle (1) with a seat height changing device (24), comprising:
a seat (2);
a supporting member (35) interposed between the seat (2) and a vehicle body frame (11) to receive the load of the seat (2);
engaging means (51; 26, 27, 28; 36, 37, 38) for attaching the seat (2) to the vehicle body frame (11); wherein
the supporting member (35) has a supporting seat arrangement on which the seat (2) is mounted;
**characterized in that**
the supporting member (35) is supported to be shiftable in a substantially horizontal direction; and
said supporting seat arrangement includes a low-position supporting seat means (52) and a high-position supporting seat means (53) disposed at different height levels on the supporting member (35).

2. A motorcycle with a seat height changing device according to claim 1, **characterized in that** the high-position supporting seat means (53) comprises a surface level disposed higher than that of the low-position supporting seat means (52).

3. A motorcycle with a seat height changing device according to claim 1 or 2, **characterized in that** the low-position supporting seat means (52) and the high-position supporting seat means (53) are both disposed in line with a direction of movement of the supporting member (35).

4. A motorcycle with a seat height changing device according to at least one of the preceding claims 1 to 3, **characterized in that** the supporting member (35) has a substantially rectangular shape in a plan view.

5. A motorcycle with a seat height changing device according to claim 4, **characterized in that** the supporting seat means (52, 53) are formed at respective corners of the supporting member (35) to support the seat (2).

6. A motorcycle with a seat height changing device according to at least one of the preceding claims 1 to 5, **characterized in that** the high-position supporting seat means (53) comprises a plurality of upper surfaces of projections (55) projecting upward from two opposing lateral sides (35a) of the supporting member (35).

7. A motorcycle with a seat height changing device according to at least one of the preceding claims 1 to 6, **characterized in that** said supporting member (35) is made of plastic material.

8. A motorcycle with a seat height changing device according to at least one of the preceding claims 1 to 7, **characterized in that** main legs (31) and sub legs (32) made of rubber are provided to project from a lower side seat plate (21) of the seat (2) to engage the low and high position supporting seat means (52, 53).

9. A motorcycle with a seat height changing device according to at least one of the preceding claims 1 to 8, **characterized in that** the engaging means (51; 26, 27, 28; 36, 37, 38) includes an engaging member for preventing upward and downward movement of the seat (2) when the seat is supported by the low-position supporting seat means (52) or the high-position supporting seat means (53).

10. A motorcycle with a seat height changing device according to at least one of the preceding claims 1 to 9, **characterized in that** the engaging means (51; 26, 27, 28; 36, 37, 38) includes an engaging member for preventing horizontal movement of the seat when the seat is supported by a low-position supporting seat (62) and when the seat is supported by a high-position supporting seat (61).

11. A motorcycle with a seat height changing device according to at least one of the preceding claims 1 to 10, **characterized in that**:
the movement direction of the supporting member (35) is a front-and-rear direction;
a first seat supporting position (P1) at which the seat (2) is supported by the low-position supporting seat means (52) is provided;
a second seat supporting position (P2) at which the high-position supporting seat means (53) is located closer to a front of the vehicle body than the low-position supporting seat means (52) located at the first seat supporting position (P1) is provided; and
a positioning means (69) for positioning the supporting member (35) at either the first seat supporting position (P1) or the second seat supporting position (P2) is provided.

12. A motorcycle with a seat height changing device according to claim 11, **characterized in that** the positioning means (69) includes a plurality of positioning members, and the plurality of positioning members are disposed on the vehicle body frame (11) away from one another in the front-and-rear direction for a distance equal to the distance between the first seat supporting position (P1) and the second seat supporting position (P2).

13. A motorcycle with a seat height changing device according to at least one of the preceding claims 1 to 12, **characterized in that** the vehicle body frame (11) includes a seat rail (12) positioned at a rear part thereof, and the supporting member (35) is slidably supported on the seat rail (12) to freely slide thereon.

14. A motorcycle with a seat height changing device according to at least one of the preceding claims 1 to 13, **characterized in that** the engaging means (51; 26, 27, 28; 36, 37, 38) includes:
a front engaging member (27, 28) containing a front engaging piece (26) which projects frontward from a front end of the seat (2), and a first front engaging opening (28d) for engaging with the front engaging piece (26) when the seat (2) is located at the high-position supporting seat means (53), and a second front engaging opening (27d) for engaging with the front engaging piece (26) when the seat (2) is located at the low-position supporting seat means (52), which are formed on the vehicle body frame (11) and have side walls (27a, 27b; 28a, 28b) for contacting the front engaging piece (26) from both lateral sides and an upper wall (27c, 28c) for contacting the front engaging piece (26) from above;
a rear engaging member (40) containing a rear engaging piece (36) which projects downward from a rear end of the seat (2) and has a first engaging hole (37) for engaging with a lock device (39), which is formed on the vehicle body frame, when the seat (2) is located at the high-position supporting seat means (53), and a second engaging hole (38) for engaging with the lock device (39) when the seat (2) is located at the low-position supporting seat means (52) ; and
a rear positioning member (46) containing a front positioning projection (41) and a rear positioning projection (42) which project downward from the rear end of the seat (2), and a first positioning hole (44), which is formed on the vehicle body frame (11) and engages with the front positioning projection (41), for positioning the front positioning projection (41) when the seat (2) is located at the high-position supporting seat means (53), and a second positioning hole (45), which is also formed on the vehicle body frame (11) and engages with the rear positioning projection (42), for positioning the rear positioning projection (42) when the seat (2) is located at the low-position supporting seat means (52).

15. A motorcycle with a seat height changing device according to claim 14, **characterized in that**:
the vehicle body frame (11) contains a pair of left and right seat rails (12) positioned in a rear part thereof;
a bracket (29) disposed between the seat rails (12) and attached thereto is provided to support a fuel tank (7); and
the front engaging member (27, 28) is provided on the bracket (29).

16. A motorcycle with a seat height changing device according to one of the preceding claims 1 to 15, **characterized in that** the seat includes a main seat (2) for a rider and a tandem (3) seat for a co-rider, and a front end of the tandem seat (3) at its both lateral sides is so shaped as to hold a rear end of the main seat (2) from both lateral sides.

## Patentansprüche

1. Motorrad (1) mit einer Sitzhöhen-Änderungsvorrichtung (24), die umfasst:
einen Sitz (2);
ein tragendes Element (35), das zwischen dem Sitz (2) und einem Fahrzeug-Karosserierahmen (11) angeordnet ist, um die Last des Sitzes (2) aufzunehmen;
eine Eingriffseinrichtung (51; 26, 27, 28; 36, 37, 38) zum Anbringen des Sitzes (2) an dem Fahrzeug-Karosserierahmen (11);
wobei das tragende Element (35) eine tragende Aufnahmeanordnung aufweist, an der der Sitz (2) angebracht ist;
**dadurch gekennzeichnet, dass**
das tragende Element (35) so gelagert ist, dass es in einer im Wesentlichen horizontalen Richtung verschoben werden kann, und
die tragende Aufnahmeanordnung eine tragenden Aufnahmeeinrichtung (52) für niedrige Position sowie eine tragende Aufnahmeeinrichtung (53) für hohe Position enthält, die in unterschiedlichen Höhen an dem tragenden Element (35) angeordnet sind.

2. Motorrad mit einer Sitzhöhenänderungsvorrichtung nach Anspruch 1, **dadurch gekennzeichnet, dass** die tragende Aufnahmeeinrichtung (53) für hohe Position eine Oberflächenhöhe umfasst, die höher liegt als die der tragenden Aufnahmeeinrichtung (52) für niedrige Position.

3. Motorrad mit einer Sitzhöhen-Änderungsvorrichtung nach Anspruch 1 oder 2, **dadurch gekennzeichnet, dass** die tragende Aufnahmeeinrichtung (52) für niedrige Position und die tragende Aufnahmeeinrichtung (53) für hohe Position beide fluchtend mit einer Bewegungsrichtung des tragenden Elementes (35) angeordnet sind.

4. Motorrad mit einer Sitzhöhen-Änderungsvorrichtung nach wenigstens einem der vorangehenden Ansprüche 1 bis 3, **dadurch gekennzeichnet, dass** das tragende Element (35) in Draufsicht eine im Wesentlichen rechteckige Form hat.

5. Motorrad mit einer Sitzhöhen-Änderungsvorrichtung nach Anspruch 4, **dadurch gekennzeichnet, dass** die tragenden Aufnahmeeinrichtungen (52, 53) an jeweiligen Ecken des Target-Elementes (35) ausgebildet sind, um den Sitz (2) zu tragen.

6. Motorrad mit einer Sitzhöhen-Änderungsvorrichtung nach wenigstens einem der vorangehenden Ansprüche 1 bis 5, **dadurch gekennzeichnet, dass** die tragende Aufnahmeeinrichtung (53) für hohe Position eine Vielzahl oberer Flächen von Vorsprüngen (55) umfasst, die von zwei einander gegenüberliegenden Querseiten (35) des tragenden Elementes (35) nach oben vorstehen.

7. Motorrad mit einer Sitzhöhen-Änderungsvorrichtung nach wenigstens einem der vorangehenden Ansprüche 1 bis 6, **dadurch gekennzeichnet, dass** das tragende Element (35) aus Kunststoffmaterial besteht.

8. Motorrad mit einer Sitzhöhen-Änderungsvorrichtung nach wenigstens einem der vorangehenden Ansprüche 1 bis 7, **dadurch gekennzeichnet, dass** Hauptfüße (31) und Nebenfüße (32), die aus Gummi bestehen, so vorhanden sind, dass sie von einer Unterseiten-Sitzplatte (21) des Sitzes (2) so vorstehen, dass sie mit den tragende Aufnahmeeinrichtungen (52, 53) für niedrige und für hohe Position in Eingriff sind.

9. Motorrad mit einer Sitzhöhen-Änderungsvorrichtung nach wenigstens einem der vorangehenden Ansprüche 1 bis 8, **dadurch gekennzeichnet, dass** die Eingriffseinrichtung (51; 26, 27, 38; 36, 37, 38) ein Eingriffselement enthält, mit dem Bewegung des Sitzes (2) nach oben und nach unten verhindert wird, wenn der Sitz von der tragenden Aufnahmeeinrichtung (52) für niedrige Position oder der tragenden Aufnahmeeinrichtung (53) für niedrige Position getragen wird.

10. Motorrad mit einer Sitzhöhen-Änderungsvorrichtung nach wenigstens einem der vorangehenden Ansprüche 1 bis 9, **dadurch gekennzeichnet, dass** die Eingriffseinrichtung (51; 26, 27, 38; 36, 37, 38) ein Eingriffselement enthält, mit dem horizontale Bewegung des Sitzes (2) verhindert wird, wenn der Sitz von einer tragenden Aufnahme (62) für niedrige Position getragen wird und wenn der Sitz von einer tragenden Aufnahme (61) für hohe Position getragen wird.

11. Motorrad mit einer Sitzhöhen-Änderungsvorrichtung nach wenigstens einem der vorangehenden Ansprüche 1 bis 10, **dadurch gekennzeichnet, dass**
die Bewegungsrichtung des tragenden Elementes (35) eine Längsrichtung ist;
eine erste Sitz-Trageposition (P1) vorhanden ist, an der der Sitz (2) von der tragenden Aufnahmeeinrichtung (52) für niedrige Position getragen wird;
eine zweite Sitz-Trageposition (P2) vorhanden ist, an der sich die tragende Aufnahmeeinrichtung (53) für hohe Position näher an einer Vorderseite der Fahrzeugkarosserie befindet als die tragende Aufnahmeeinrichtung (52), die sich an der ersten Sitz-Trageposition (P1) befindet; und
eine Positioniereinrichtung (69) zum Positionieren des tragenden Elementes (35) entweder an der ersten Sitz-Trageposition (P1) oder der zweiten Sitz-Trageposition (P2) vorhanden ist.

12. Motorrad mit einer Sitzhöhen-Änderungsvorrichtung nach Anspruch 11, **dadurch gekennzeichnet, dass** die Positioniereinrichtung (69) eine Vielzahl von Positionierelementen enthält und die Vielzahl von Positionierelementen an dem Fahrzeug-Karosserierahmen (11) in der Längsrichtung um einen Abstand voneinander entfernt angeordnet sind, der dem Abstand zwischen der ersten Sitz-Trageposition (P1) und der zweiten Sitz-Trageposition (P2) entspricht.

13. Motorrad mit einer Sitzhöhen-Änderungsvorrichtung nach wenigstens einem der vorangehenden Ansprüche 1 bis 12, **dadurch gekennzeichnet, dass** der Fahrzeug-Karosserierahmen (11) eine Sitzschiene (12) enthält, die an einem hinteren Teil desselben angeordnet ist, und das tragende Element (35) von der Sitzschiene (12) verschiebbar so getragen wird, dass es frei darauf gleiten kann.

14. Motorrad mit einer Sitzhöhen-Änderungsvorrichtung nach wenigstens einem der vorangehenden Ansprüche 1 bis 13, **dadurch gekennzeichnet, dass** die Eingriffseinrichtung (51; 26, 27, 28; 36, 37, 38) enthält:
ein vorderes Eingriffselement (27, 28), das ein vorderes Eingriffsteil (26), das von einem vorderen Ende des Sitzes (2) nach vorn vorsteht, und eine erste vordere Eingriffsöffnung (28d), mit der das vordere Eingriffsteil (26) in Eingriff kommt, wenn sich der Sitz (2) an der tragenden Aufnahmeeinrichtung (53) für hohe Position befindet, sowie eine zweite vordere Eingriffsöffnung (27d) enthält, mit der das vordere Eingriffsteil (26) in Eingriff kommt, wenn sich der Sitz (2) an der tragenden Aufnahmeeinrichtung (52) für niedrige Position befindet, wobei diese an dem Fahrzeug-Karosserierahmen (11) ausgebildet sind und Seitenwände (27a, 27b; 28a, 28b), die mit dem vorderen Eingriffsteil (26) von beiden Querseiten her in Kontakt kommen, sowie eine obere Wand (27c, 28c) aufweisen, die mit dem vorderen Eingriffsteil (26) von oben in Eingriff kommt;
ein hinteres Eingriffselement (40), das ein hinteres Eingriffsteil (36) enthält, das von einem hinteren Ende des Sitzes (2) nach unten vorsteht und ein erstes Eingriffsloch (37), mit dem eine Arretiervorrichtung (39) in Eingriff kommt, die an dem Fahrzeug-Karosserierahmen in Eingriff ist, wenn sich der Sitz (2) an der tragenden Aufnahmeeinrichtung (53) für hohe Position befindet, sowie ein zweites Eingriffsloch (38) aufweist, mit dem die Arretiervorrichtung (39) in Eingriff kommt, wenn sich der Sitz (2) an der tragenden Aufnahmeeinrichtung (52) für niedrige Position befindet; und
ein hinteres Positionierelement (46), das einen vorderen Positioniervorsprung (41) sowie einen hinteren Positioniervorsprung (42), die von dem hinteren Ende des Sitzes (2) nach unten vorstehen, und ein erstes Positionierloch (44), das an dem Fahrzeug-Karosseriekörper (11) ausgebildet ist und mit dem der vordere Positioniervorsprung (41) in Eingriff kommt, um den vorderen Positioniervorsprung (41) zu positionieren, wenn sich der Sitz (2) an der tragenden Aufnahmeeinrichtung (53) für hohe Position befindet, sowie ein zweites Positionierloch (45) enthält, das ebenfalls an dem Fahrzeug-Karosseriekörper (11) ausgebildet ist und mit dem hinteren Positioniervorsprung (42) in Eingriff kommt, um den hinteren Positioniervorsprung (42) zu positionieren, wenn sich der Sitz (2) an der tragenden Aufnahmeeinrichtung (52) für niedrige Position befindet.

15. Motorrad mit einer Sitzhöhen-Änderungsvorrichtung nach Anspruch 14, **dadurch gekennzeichnet, dass**
der Fahrzeug-Karosserierahmen (11) ein Paar aus einer linken und einer rechten Sitzschiene (12) enthält, die in einem hinteren Teil desselben positioniert sind;
ein Träger (29), der zwischen den Sitzschienen (12) angeordnet und daran angebracht ist, vorhanden ist, um einen Kraftstofftank (7) zu tragen; und
das vordere Eingriffselement (27, 28) an dem Träger (29) vorhanden ist.

16. Motorrad mit einer Sitzhöhen-Änderungsvorrichtung nach einem der vorangehenden Ansprüche 1 bis 15, **dadurch gekennzeichnet, dass** der Sitz einen Hauptsitz (2) für einen Fahrer sowie einen Soziussitz (3) für einen Mitfahrer enthält und ein vorderes Ende des Soziussitzes (3) an seinen beiden Querseiten so geformt ist, dass es ein hinteres Ende des Hauptsitzes (2) von beiden Querseiten her hält.

## Revendications

1. Motocycle (1) avec un dispositif de changement de hauteur du siège (24), comprenant :
- un siège (2) ;
- un élément de support (35) placé entre le siège (2) et un cadre de véhicule (11) pour recevoir la charge du siège (2) ;
- des moyens d'emboîtement (51 ; 26, 27, 28 ; 36, 37, 38) pour fixer le siège (2) au cadre de véhicule (11) ;
étant précisé que l'élément de support (35) a un dispositif de support de siège sur lequel le siège (2) est monté ;
**caractérisé en ce que** l'élément de support (35) est supporté de manière à pouvoir être déplacé dans un sens globalement horizontal ; et
le dispositif de support de siège comprend des moyens de support de siège pour position basse (52) et des moyens de support de siège pour position haute (53) disposés à des niveaux de hauteur différents sur l'élément de support (35).

2. Motocycle avec un dispositif de changement de hauteur de siège selon la revendication 1, **caractérisé en ce que** les moyens de support de siège pour position haute (53) comprennent un niveau de surface qui est disposé plus haut que celui des moyens de support de siège pour position basse (52).

3. Motocycle avec un dispositif de changement de hauteur de siège selon la revendication 1 ou 2, **caractérisé en ce que** les moyens de support de siège pour position basse (52) et les moyens de support de siège pour position haute (53) sont disposés tous les deux dans l'alignement d'une direction de mouvement de l'élément de support (35).

4. Motocycle avec un dispositif de changement de hauteur de siège selon l'une au moins des revendications 1 à 3, **caractérisé en ce que** l'élément de support (35) présente, vu en plan, une forme globalement rectangulaire.

5. Motocycle avec un dispositif de changement de hauteur de siège selon la revendication 4, **caractérisé en ce que** les moyens de support de siège (52, 53) sont formés aux coins respectifs de l'élément de support (35) pour supporter le siège (2).

6. Motocycle avec un dispositif de changement de hauteur de siège selon l'une au moins des revendications 1 à 5, **caractérisé en ce que** les moyens de support de siège pour position haute (53) comprennent plusieurs surfaces supérieures de saillies (55) qui dépassent, vers le haut, de deux côtés latéraux opposés (35a) de l'élément de support (35).

7. Motocycle avec un dispositif de changement de hauteur de siège selon l'une au moins des revendications 1 à 6 précédentes, **caractérisé en ce que** l'élément de support (35) est en matière plastique.

8. Motocycle avec un dispositif de changement de hauteur de siège selon l'une au moins des revendications 1 à 7 précédentes, **caractérisé en ce que** des pieds principaux (31) et des pieds secondaires (32) en caoutchouc sont prévus pour dépasser d'une plaque inférieure (21) du siège (2) pour s'emboîter dans les moyens de support de siège pour position basse et pour position haute (52, 53).

9. Motocycle avec un dispositif de changement de hauteur de siège selon l'une des revendications 1 à 8 précédentes, **caractérisé en ce que** les moyens d'emboîtement (51 ; 26, 27, 28 ; 36, 37, 38) comprennent un élément d'emboîtement pour empêcher un mouvement ascendant et descendant du siège (2) quand celui-ci est supporté par les moyens de support de siège pour position basse (52) ou par les moyens de support de siège pour position haute (53).

10. Motocycle avec un dispositif de changement de hauteur de siège selon l'une au moins des revendications 1 à 9 précédentes, **caractérisé en ce que** les moyens d'emboîtement (51 ; 26, 27, 28 ; 36, 37, 38) comprennent un élément d'emboîtement pour empêcher un mouvement horizontal du siège quand celui-ci est supporté par un support de siège pour position basse (62) et quand il est supporté par un support de siège pour position haute (61).

11. Motocycle avec un dispositif de changement de hauteur de siège selon l'une au moins des revendications 1 à 10 précédentes, **caractérisé en ce que** :
le sens de mouvement de l'élément de support (35) est un sens avant et arrière ;
il est prévu une première position de support de siège (P1), dans laquelle le siège (2) est supporté par les moyens de support de siège pour position basse (52) ;
il est prévu une seconde position de support de siège (P2), dans laquelle les moyens de support de siège pour position haute (53) se trouvent plus près d'une partie avant du corps de véhicule que les moyens de support de siège pour position basse (52) situés au niveau de la première position de support de siège (P1); et
il est prévu des moyens de positionnement (69) pour positionner l'élément de support (35) soit dans la première position de support de siège (P1), soit dans la seconde position de support de siège (P2).

12. Motocycle avec un dispositif de changement de hauteur de siège selon la revendication 11, **caractérisé en ce que** les moyens de positionnement (69) comprennent plusieurs éléments de positionnement, et ces éléments de positionnement sont disposés sur le cadre de véhicule (11) en étant éloignés les uns des autres, dans le sens avant et arrière, d'une distance égale à la distance entre la première position de support de siège (P1) et la seconde position de support de siège (P2).

13. Motocycle avec un dispositif de changement de hauteur de siège selon l'une au moins des revendications 1 à 12 précédentes, **caractérisé en ce que** le cadre de véhicule (11) comprend un rail de siège (12) qui est placé sur une partie arrière du cadre, et l'élément de support (35) est supporté coulissant sur le rail de siège (12) afin de coulisser librement sur celui-ci.

14. Motocycle avec un dispositif de changement de hauteur de siège selon l'une au moins des revendications 1 à 13 précédentes, **caractérisé en ce que** les moyens d'emboîtement (51 ; 26, 27, 28 ; 26, 37, 38) comprennent :
un élément d'emboîtement avant (27, 28) contenant une pièce d'emboîtement avant (26) qui dépasse, vers l'avant, d'une extrémité avant du siège (2), et une première ouverture d'emboîtement avant (28d) destinée à s'emboîter avec ladite pièce d'emboîtement avant (26) quand le siège (2) se trouve au niveau des moyens de support de siège pour position haute (53), et une seconde ouverture d'emboîtement avant (27d) destinée à s'emboîter avec la pièce d'emboîtement avant (26) quand le siège (2) se trouve au niveau des moyens de support de siège pour position basse (52), qui sont formés sur le cadre de véhicule (11) et qui ont des parois latérales (27a, 27b ; 28a, 28b) pour venir en contact avec la pièce d'emboîtement avant (26) à partir des deux côtés latéraux, et une paroi latérale (27c, 28c) pour venir en contact avec la pièce d'emboîtement avant (26) par le haut ;
un élément d'emboîtement arrière (40) contenant une pièce d'emboîtement arrière (36) qui dépasse, vers le bas, d'une extrémité arrière du siège (2) et qui a un premier trou d'emboîtement (37) destiné à s'emboîter avec un dispositif de verrouillage (39) qui est formé sur le cadre de véhicule, quand le siège (2) se trouve au niveau des moyens de support de siège pour position haute (53), et un second trou d'emboîtement (38) destiné à s'emboîter avec le dispositif de verrouillage (39) quand le siège (2) se trouve au niveau des moyens de support de siège pour position basse (52) ; et
un élément de positionnement arrière (46) contenant une saillie de positionnement avant (41) et une saillie de positionnement arrière (42) qui dépassent, vers le bas, de l'extrémité arrière du siège (2), et un premier trou de positionnement (44) qui est formé sur le cadre de véhicule (11) et s'emboîte avec la saillie de positionnement avant (41) pour positionner celle-ci quand le siège (2) se trouve au niveau des moyens de support de siège pour position haute (53), et un second trou de positionnement (45) qui est formé lui aussi sur le cadre de véhicule (11) et s'emboîte avec la saillie de positionnement arrière (42) pour positionner celle-ci quand le siège (2) se trouve au niveau des moyens de support de siège pour position basse (52).

15. Motocycle avec un dispositif de changement de hauteur de siège selon la revendication 14, **caractérisé en ce que** le cadre de véhicule (11) contient deux rails de siège gauche et droit (12) placés dans une partie arrière dudit cadre ;
une attache (29) disposée entre les rails de siège (12) et fixée à ceux-ci est destinée à supporter un réservoir de carburant (7) ; et
l'élément d'emboîtement avant (27, 28) est disposé sur l'attache (29).

16. Motocycle avec un dispositif de changement de hauteur de siège selon l'une des revendications 1 à 15, **caractérisé en ce que** le siège comprend un siège principal (2) pour un motocycliste, et un second siège (3) pour un passager, et une extrémité avant du second siège (3) est formée, sur ses deux côtés latéraux, de manière à tenir une extrémité arrière du siège principal (2) par les deux côtés latéraux.
